# EUROPEAN PATENT APPLICATION

(11) **EP 2 884 449 A1**
(43) Date of publication of application: **17.06.2015**
(21) Application number: 13827330.5
(22) Date of filing: 08.08.2013
(51) Int. Cl.: G06Q 30/06

(54) **TRANSACTION SUPPORT SYSTEM**

(30) Priority: 08.08.2012 JP 2012176514
(71) Applicant: Keysoft Inc., Ashigarakami-gun Kanagawa 258-0002 (JP); Kagiwada, Yoshimitsu, Ashigarakami-gun Kanagawa 258-0002 (JP)
(72) Inventor: KAGIWADA, Yoshimitsu, Kanagawa 258-0002 (JP)
(74) Representative: Schmidbauer, Andreas Konrad
(86) International application number: PCT/JP2013/071575
(87) International publication number: WO 2014/025000

(57) **Abstract**

Disclosed is a transaction support system that comprises a transaction information processing part configured to communicate with terminals of traders via the Internet, a generation rule storage part configured to store a correspondence between a data item of order data and a data item of delivery data in a transaction, and a transaction information storage part configured to store the order data and the delivery data. The transaction information processing part automatically generates delivery data based on the correspondence stored in the generation rule storage part from order data generated from a transaction between the traders, and stores the delivery data into the transaction information storage part.

## Description

### TECHNICAL FIELD

The invention relates to a transaction support system supporting transactions among multiple traders.

### BACKGROUND ART

The applicant of the invention has disclosed Patent Document 1. Patent Document 1 discloses a system of enabling multiple traders involved in a series of transactions to carry out the transactions while sharing transaction data. However, even if management of transaction information is computerized with a computer system, parties involved in a transaction must issue transaction slips or corresponding transaction data (e.g., such as order data and delivery data), which needs manpower.

### PRIOR ART DOCUMENT

### PATENT DOCUMENT

Patent Document 1: Japanese Patent Application Publication No.2004-196550

### SUMMARY OF THE INVENTION

### PROBLEM TO BE SOLVED BY THE INVENTION

It is an object of the invention to automate generation of transaction data in a transaction among multiple traders to reduce labor of the parties involved in the transaction.

### MEANS FOR SOLVING THE PROBLEM

For solving the foregoing problems, the invention employs the following configuration. Specifically, a transaction support system includes: a transaction information processing part configured to communicate with terminals of traders via the Internet; a generation rule storage part configured to store correspondences between data items of order data and data items of delivery data in transactions; and a transaction information storage part configured to store the order data and the delivery data. In the transaction support system, the transaction information processing part automatically generates delivery data based on the correspondences stored in the generated rule storage part from order data generated from a transaction between the traders, and stores the delivery data in the transaction information storage part.

### EFFECT OF THE INVENTION

According to the invention, labor of parties involved in a transaction between the traders can be reduced by automating generation of transaction data.

### BRIEF DESCRIPTION OF THE DRAWINGS

[Fig. 1] Fig. 1 is a configuration diagram illustrating an embodiment of the invention;
[Fig. 2] Fig. 2 is a structure drawing of a commodity list illustrated in Fig. 1;
[Fig. 3] Fig. 3 is a structure drawing of traceability information illustrated in Fig. 1;
[Fig. 4] Fig. 4 is a structure drawing of a trader DB;
[Fig. 5] Fig. 5 is a block diagram illustrating an example scheme of the transaction;
[Fig. 6] Fig. 6 is a configuration diagram of a trader-to-trader link system incorporated into a transaction support system;
[Fig. 7] Fig. 7 is a configuration diagram of a data migration system incorporated into a transaction support system;
[Fig. 8] Fig. 8 is a configuration diagram of a data integration system incorporated into a transaction support system.

### MODE FOR CARRYING OUT THE INVENTION

### <Transaction mode>

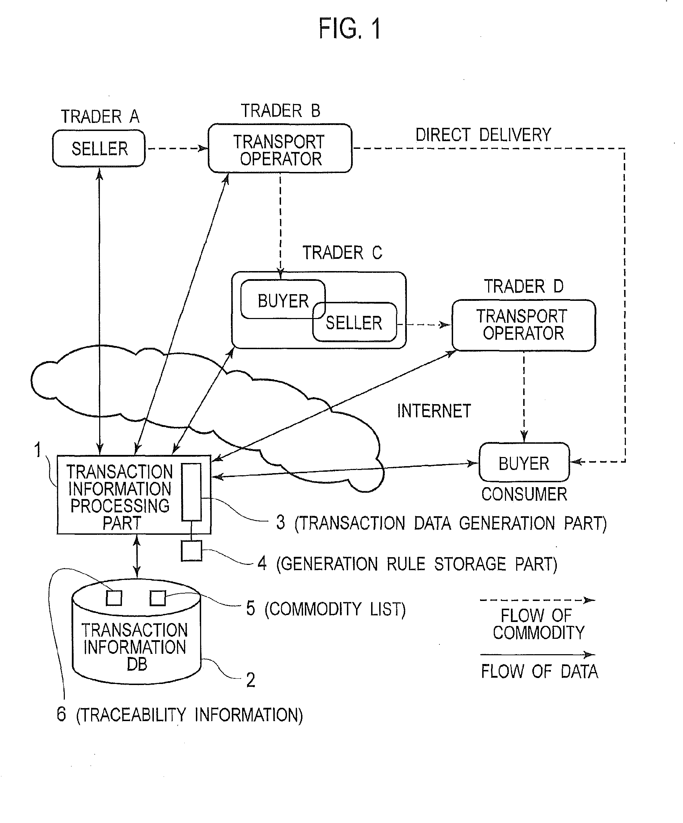

Hereinafter, an embodiment of the invention is described. Illustrated in Fig. 1 are a form of a commercial transaction between multiple traders and a consumer, and a configuration diagram of a transaction support system supporting transaction.

In Fig. 1, a consumer (or a downstream trader) as a buyer places an order to trader C as a seller for a commodity handled by trader C. If the ordered commodity is a commodity available from the stock thereof, trader C delivers ex-stock commodity to the consumer (or the downstream trader) as the buyer by using trader D as a transport operator.

When the ordered commodity is a commodity dealt with by trader A and is a commodity which should be directly delivered from trader A to a consumer (or the downstream trader), trader C, who is a seller, orders the commodity from trader A and directs trader A to directly deliver to the consumer (or the downstream trader). In accordance with the direction of trader C, trader A delivers the ordered commodity to the consumer (or the downstream trader) as the buyer by using trader B as a transport operator.

When purchasing a commodity handled by trader A, trader C orders the commodity from trader A. Trader A delivers the ordered commodity to trader C as the buyer by using trader B as the transport operator.

Here, the seller relative to the buyer is referred to as "upstream", and conversely, the buyer relative to the seller is referred to as "downstream".

Here, a transaction form illustrated in Fig. 1 is just illustrative. The transaction support system according to the embodiment is capable of supporting various transaction forms involving multiple traders, but not limited to the transaction form illustrated in Fig. 1.

### (Configuration of transaction support system)

The transaction support system according to the embodiment supports a transaction among multiple traders described above. In the embodiment, the transaction support system includes transaction information processing part 1 configured to transmit and receive data from terminals of sellers, buyers, and transport operators via the Internet, and transaction information database (transaction information DB 2) configured to store transaction information handled by the transaction information processing part 1.

Transaction information processing part 1 includes transaction data generation part 3 configured to automatically generate other transaction data based on one transaction data. Transaction data generation part 3 automatically generates, for example, delivery data based on order data. Also, for example, transaction data generation part 3 automatically generates sales data from purchase data. Reference numeral 4 represents the generation rule storage part, which stores correspondences between data items of one transaction data and data items of other transaction data.

Transaction information processing part 1 communicates with terminals of the buyer, seller, and transport operator, via, for example, a system of WWW (World Wide Web) on the Internet. For this reason, transaction information processing part 1 includes a web server, and each terminal of the seller, buyer and transport operator includes a web client.

Transaction information DB 2 stores a list of commodities sold by traders (commodity list 5), and traceability information 6 in which distribution channels among traders for individual commodities are recorded. Also, transaction information processing part 1 accesses a trader database (not shown).

### (Structure of commodity list)

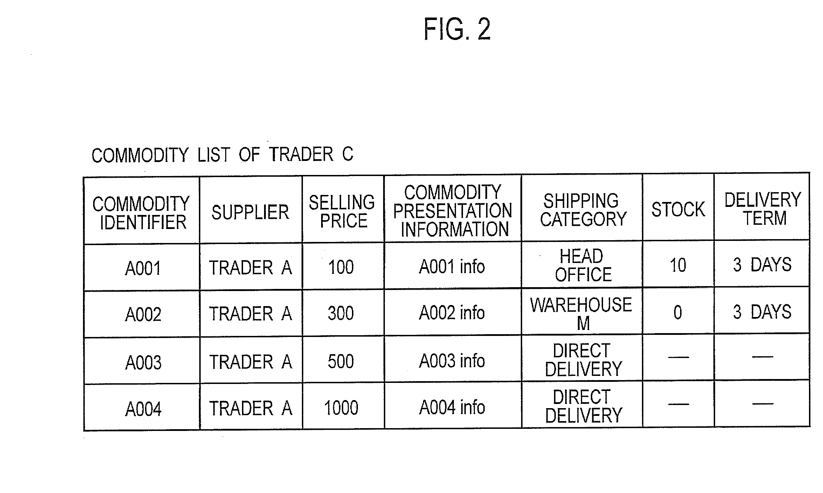

An example of commodity list 5 in the embodiment is illustrated in Fig. 2. Commodity list 5 includes commodity lists for each trader. Fig. 2 illustrates a commodity list of trader C. Commodity lists for each trader associate the commodity identifier with the supplier, selling price, commodity presentation information, shipping category, stock, and delivery term.

"Commodity identifier" is an identifier used for distinguishing a commodity from the other commodity. "Supplier" is a trader identifier of a trader from whom the commodity is purchased. "Selling price" is a price at which the company as the seller sells the commodity to the buyer. "Commodity presentation information" is a file name of the file in which information presenting the commodity is stated. The file may contain a file path. "Shipping category" specifies which business-base of the company the commodity is to be shipped from, or specifies that the commodity is to be directly delivered from an upstream trader to the buyer. "Stock" is the number of the commodities in stock of the company. "Delivery term" is a normal delivery term for delivery of the commodity from the company to the buyer. "Trader identifier" is an identifier used for identifying a trader from other traders.

### (Structure of traceability information)

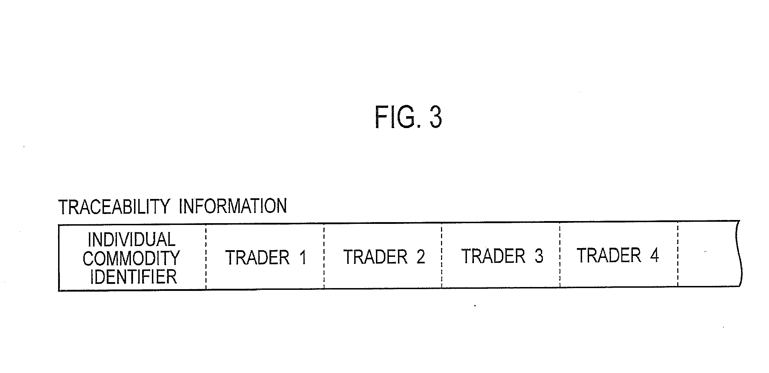

Structure of traceability information 6 in the embodiment is illustrated in Fig. 3. Traceability information 6 includes an individual commodity identifier coupled, in a time-series manner, with an identifier of each of traders who handled the commodity. "Individual commodity identifier" is data identifying an individual of the commodity from other individuals. "Identifier of trader" is a trader identifier described above having a fixed data length. Traceability information 6 is configured in such a manner that total data length extends when data of the trader identifier is added to the individual commodity identifier. For example, assume that the individual commodity identifier is "ABCD", a first trader identifier is "abc", a second trader identifier is "123", and a third trader identifier is "def". In this case, the traceability information of an individual expressed with the individual commodity identifier "ABCD" is expressed with single data of "ABCDabc123def".

### (Structure of trader database)

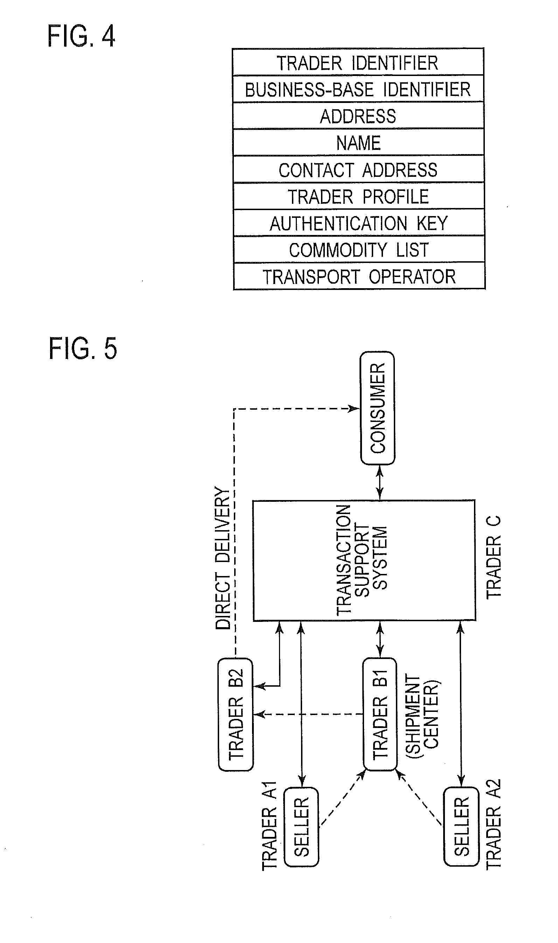

Structure of trader database (trader DB) in the embodiment is illustrated in Fig. 4. In the trader DB, for each business-base of each trader, trader identifier, business-base identifier, address, name, contact address, trader profile, authentication key, commodity list of the trader, and transport operator which the trader uses for delivery of the commodity are associated with each other. "Trader identifier" is an identifier used for identifying a trader from other traders. The trader includes a transport operator. "Business-base identifier" is an identifier used for identifying a trader's business-base from other business-bases. The business-base includes a business office such as a branch, a manufacturing business-base such as a factory, and a distribution business-base such as a warehouse. "Address" is the address of a business-base of the trader. "Name" is the name of a business-base of the trader. Name may contain department name, title, and name of responsible person. "Contact address" is contact address of a business-base of the trader. Contact address includes an electronic mail address. "Trader profile" is information used for introducing the trader to other traders. "Authentication key" is used in a link system to be described later. "Commodity list" is identified by an identifier of a commodity of the trader. "Transport operator" is identified by a trader identifier of the transport operator.

### (Automatic generation of transaction data)

In Fig. 1, transaction data generation part 3 automatically generates various transaction data necessary in the course of a transaction in accordance with generation instruction from a terminal. For example, transaction data generation part 3 automatically generates delivery data based on order data inputted by the buyer (or, input agents thereof). Also, transaction data generation part 3 automatically generates sales data based on inputted purchase data. Generally in the field of EDI (Electronic Data Interchange), order data and delivery data are known to have a relationship termed two sides of the same coin, and the values of data items of both of those data are common to each other. Similarly, purchase data and sales data are also known to have a relationship termed two sides of the same coin, and the values of data items of both of those data are common to each other. Accordingly, transaction data generation part 3 automatically generates delivery data by inserting the value of each of data items of inputted order data into a corresponding data item of delivery data. Similarly, transaction data generation part 3 automatically generates sales data by inserting the value of each of data items of inputted purchase data into a corresponding data item of sales data. Thus, transaction data generation part 3 automatically generates one transaction data based on the other transaction data having a data item of corresponding value.

A correspondence between data items of one transaction data and data items of the other transaction data is registered in generation rule storage part 4 in advance. Transaction data generation part 3 refers to the correspondences of data items registered in generation rule storage part 4 to automatically generate one transaction data from other transaction data, the one and other transaction data having a relationship termed two sides of the same coin.

According to an aspect of the invention, labor of traders involved in a transaction among multiple traders can be reduced by automating generation of transaction data.

### (Automatic generation of traceability information)

Delivery data generated by transaction data generation part 3 includes information of the seller and buyer for specific individual commodity. Accordingly, based on delivery data generated by transaction data generation part 3, transaction information processing part 1 couples the individual commodity identifier, in a time-series manner, with trader identifiers of the seller and buyer of the commodity, and thereby automatically generates and stores traceability information 6 in transaction information DB 2.

According to an aspect of the invention, labor of traders involved in a transaction among multiple traders can be reduced by automating generation of traceability information.

### (Example of transaction using the system)

In Fig. 5, the consumer acquires a commodity list of commodities handled by trader C, and orders a commodity of trader A1 (commodity provided by trader A1) and a commodity of trader A2 (commodity provided by trader A2), both contained in the commodity list, to trader C. The ordered commodities are delivered to trader B1 (shipment center) by trader A1 and trader A2, consolidated into a package at the shipment center, and then shipped by trader B2 as a transport operator directly to the consumer. In the course of the transaction, transaction support system stores, in transaction information DB 2, order data corresponding to a transaction between the consumer and trader C, order data corresponding to a transaction between trader C and trader A1, and order data corresponding to a transaction between trader C" and trader A2.

Based on the respective order data, transaction data generation part 3 generates delivery data corresponding to respective order data. Transaction information processing part 1 stores delivery data generated by transaction data generation part 3 into transaction information DB 2. Based on respective delivery data generated by transaction data generation part 3, transaction information processing part 1 generates traceability information 6 and stores in transaction information DB 2. In this transaction example, a tablet terminal, a cellular terminal, or the like may be used as a terminal of the consumer.

### (Link system among traders)

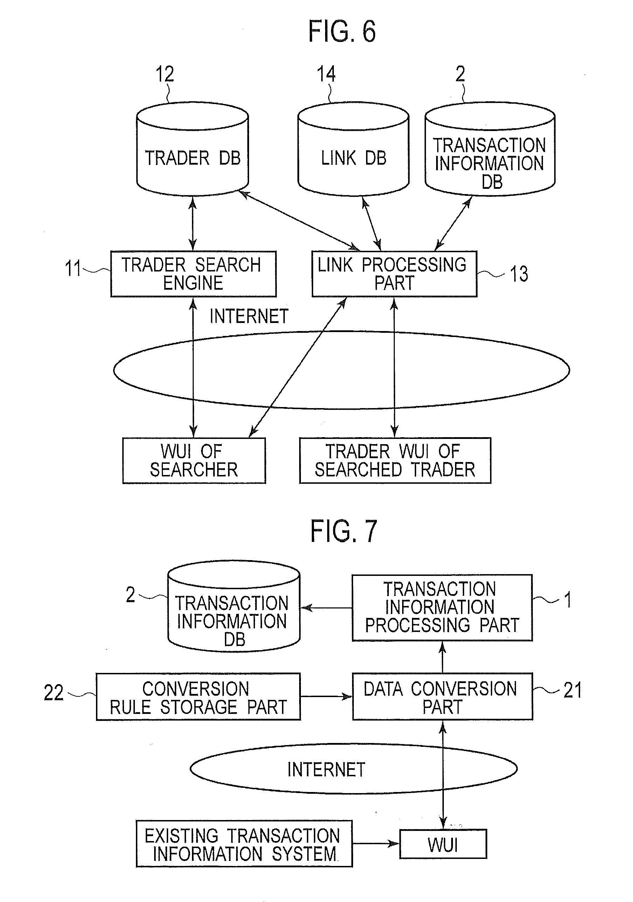

Fig. 6 illustrates a configuration of a link system among traders utilizing a transaction support system. This link system enables easy start of a new inter-trader transaction. A trader (or searcher) intending to find a transaction partner inputs a search query through WUI (Web User Interface) of a terminal. Trader search engine 11 searches trader DB 12 for a trader matching the search query inputted through the WUI, and causes search results to be displayed on the WUI. The searcher selects a candidate trader from the search results displayed on the WUI, and performs an operation to transmit a transaction request to the trader (searched trader). In response to this operation, the WUI transmits the trader identifier of the searcher and the trader identifier of the searched trader to link processing part 13.

Link processing part 13 receives the trader identifier of the searcher from the searcher's WUI, and reads out a trader profile of a trader corresponding to the trader identifier from trader DB 12. Then, link processing part 13 causes a WUI (WUI of searched trader) of the terminal corresponding to the trader identifier of the searched trader to display the trader profile of the searcher and display a question about whether to start a transaction with the searcher.

If the searched trader performs an operation to start the transaction in response to the question, the WUI of the searched trader transmits that decision to link processing part 13. Upon receiving the notice of transaction start, link processing part 13 stores the trader identifier of the searcher and the trader identifier of the searched trader in link DB 14 in association with each other, and adds a commodity contained in commodity list 5 corresponding to the trader identifier of the searched trader, to commodity list 5 corresponding to the trader identifier of the searcher. Then, link processing part 13 sets the trader identifier of the searched trader as a supplier of the commodity to be added to commodity list 5. Thus, the searcher can start transaction of the commodity with the searched trader as the supplier. In the above scenario, the searcher acts as the buyer, and the searched trader acts as the seller. However, conversely, the searcher may be the seller, and the searched trader may be the buyer. In this case, a commodity contained in commodity list 5 corresponding to the trader identifier of the searcher is added to commodity list 5 corresponding to the trader identifier of the searched trader, and link processing part 13 sets the trader identifier of the searcher as a supplier of the commodity added to commodity list 5. Thus, the searched trader can start transaction of the commodity with the searcher as the supplier.

Here, if the searched trader registers an authentication key in trader DB 12, link processing part 13 requests input of the authentication key of the searched trader through the WUI of the searcher. The searcher's WUI transmits the authentication key of the searched trader inputted by the searcher to link processing part 13. If the inputted authentication key does not match the authentication key of the searched trader, link processing part 13 rejects the transaction request from the searcher. Link processing part 13 advances the above processing only when the authentication key is matched. The searched trader may distribute the authentication key to acquaintances thereof by electronic mail or the like in advance. By using the authentication key, transaction request through the system may be accepted only from a limited party such as acquaintances.

### (System of assisting data migration into transaction support system)

Fig. 7 is a configuration diagram of a data migration system. When a trader becomes a new user of the transaction support system, the data migration system assists work for bringing data in a different specification from the trader's existing transaction information system into the transaction support system. The operator uploads the data of the existing transaction information system to the server by operating the WUI of the terminal. Data conversion part 21 receives the uploaded data, and converts the data of the existing system according to a conversion rule registered in conversion rule storage part 22 so that the data can be compatible with the data specification of transaction information DB 2. In conversion rule storage part 22, a rule for conversion to the data specification of transaction information DB 2 is described for each of multiple data specifications known as data specifications of existing systems. The operator of a terminal notifies the type of data specification of an existing system to data conversion part 21 in advance by operating the WUI. Data conversion part 21 uses a conversion rule compatible with the type of the data specification of the existing system notified by the WUI by reading the conversion rule from conversion rule storage part 22. Transaction information processing part 1 stores the data obtained through conversion by data conversion part 21 into transaction information DB 2. According to the system, a trader intending to utilize the transaction support system can easily migrate the data of their existing system into the transaction support system.

When the system is operated bidirectionally in real time, the system always runs two functions, one of which is to convert transaction information, inputted through a first existing transaction information system, to data usable in the transaction support system according to the invention, and to store the obtained data into transaction information DB 2, and the other of which is to convert transaction information, requested by a second existing transaction information system, to data usable in the requesting transaction information system, and to provide the obtained data to the second existing transaction information system. In this way, first and second traders utilizing the transaction support system according to the invention may exchange transaction information with each other while utilizing their respective existing transaction information systems.

### (Data integration system to which Semantic technology is applied)

Conventional data integration of Company A, Company B and Company C which manage the transaction information according to their own respective data specifications involves separate data integrations such as data integration between a system of Company A and a system of Company B, data integration between the system of Company B and a system of Company C, and data integration between the system of Company C and the system of Company A. Even with such data integrations, it is difficult to integrate data of all the systems of Companies A, B and C into one set of data. An embodiment described below enables easy data integration of the systems of multiple traders into one set of data.

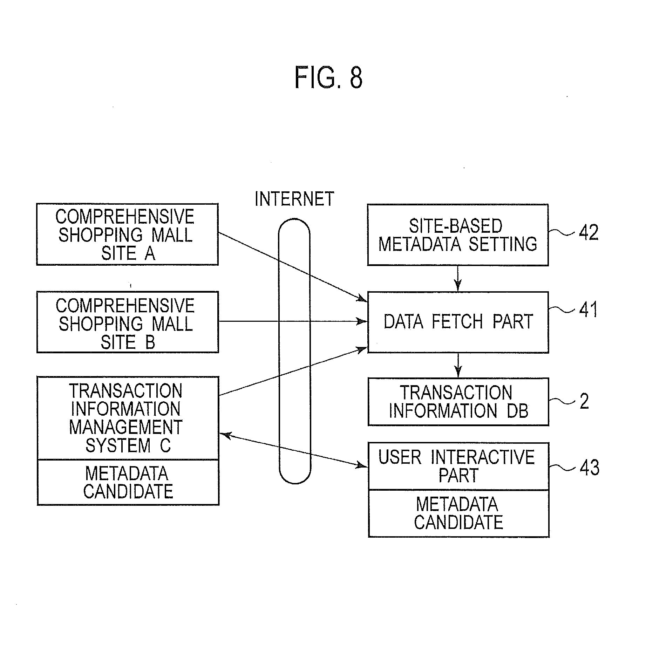

In Fig. 8, data of existing comprehensive shopping mall sites A and B constructed on the Internet and data of transaction information management system C independently operated by a business operator connected to the Internet are integrated into one system by using a transaction support system according to the invention.

The transaction support system includes data fetch part 41, site-based metadata setting 42, and user interactive part 43. Data fetch part 41 and user interactive part 43 are provided in transaction information processing part 1. Site-based metadata setting 42 and metadata candidates are stored in a storage device.

"Site-based metadata setting" is registered in advance for each of existing web sites including comprehensive shopping mall sites A and B, and contains the locations of respective data managed by the web sites, and metadata which should be added to the respective data. After analyzing data structure of web sites in advance, site-based metadata setting is prepared by manpower. "Metadata candidate" is a list of selectable metadata candidates.

When data is fetched from comprehensive shopping mall site A, data fetch part 41 refers to site-based metadata setting 42 of comprehensive shopping mall site A, adds metadata corresponding to a data location of the data fetched from each data location of site A, and stores the resultant data into transaction information DB 2. Similar processing is also performed on data from comprehensive shopping mall site B.

When data is fetched from transaction information management system C, user interactive part 43 provides WUI to transaction information management system C. Also, user interactive part 43 reads metadata candidates displayable on the WUI from the storage device, and displays the metadata candidates on the WUI of system C. Then, user interactive part 43 prompts the user of system C through the WUI to designate the location of each piece of data managed by system C and select, from the metadata candidates, metadata which should be added to the data. Or, user interactive part 43 prompts the user of system C through the WUI to designate the location of each piece of data managed by system C and input, into an input field of the WUI, metadata which should be added to the data. When the user of system C presses a fetch button displayed on the WUI after linking the location of the data and the metadata with each other, data fetch part 41 acquires the data stored in system C and the metadata linked with the data, and stores the acquired data with the corresponding metadata added to the data.

With this configuration, even when data specifications are different among companies, it is possible to integrally manage data based on the meanings of data represented by metadata added to the data. Functions of this embodiment allows a trader operating an existing transaction information management system to easily make a transition to a transaction support system according to the invention, and easily start a transaction with other user traders of the transaction support system according to the invention by registering as a user of the transaction support system according to the invention. That is, just by linking an existing transaction information management system to the transaction support system according to the invention, a user can be linked with all other users utilizing the transaction support system according to the invention. A user stores operating at multiple comprehensive shopping mall sites can easily manage the stores by integrating transaction information of the stores into the transaction support system according to the invention. Further, since integrated management of data of companies by the transaction support system according to the invention enables utilization of transaction information by companies irrespective of the size thereof, for example, in the case of a search for a price of a specific commodity, prices of the commodity offered by large-scale companies and small-scale companies are presented as search results in an equal manner. This makes the content of provided product service considered important, and inhibits oligopolization. In addition, with this system, a user intending to search for transaction information of a commodity does not need to visit multiple web sites. Further, the data integration does not need much labor any more unlike the case in the past. Furthermore, since the meanings of data can be understood from the metadata, it is possible to collect cross-sectional statistics across data having a common meaning among multiple traders. Integrated statistics such as popularity of commodities across all the traders participating in the transaction support system according to the invention can be collected.

### (Presentation of delivery term to buyer)

A transaction support system according to this embodiment can present the delivery term of the commodity to the buyer. In Fig. 1, when a consumer orders a commodity of trader C, if the commodity is in stock of trader C, transaction information processing part 1 reads the delivery term of the commodity from a commodity list of trader C and notifies to a terminal of the consumer. On the other hand, if the commodity is not in stock of trader C, transaction information processing part 1 reads a delivery term by trader C from a commodity list of trader C as well as a delivery term of the commodity by trader A from a commodity list of a trader A who is a supplier of the commodity, calculates a total delivery term based on both the delivery term of trader C as a seller and the delivery term of trader A as a supplier, and notifies to a terminal of the consumer. For example, a total delivery term is the sum of a delivery term of trader A and a delivery term of trader C. If the commodity is delivered from trader A as a supplier directly to the consumer, transaction information processing part 1 reads a delivery term of the commodity from a commodity list of trader A who is a supplier, and notifies to a terminal of the consumer.

### (Hardware configuration)

In the above embodiment, transaction information processing part 1, transaction data generation part 3, trader search engine 11, link processing part 13, and data conversion part 21 are achieved by the computer executing a program. Transaction information DB 2, trader DB 12, and link DB 14 are built up within a storage device. Generation rule storage part 4 and conversion rule storage part 22 are provided in a storage region of the storage device. Data handled by the computer is read from the storage device or stored in the storage device.

The scope of the invention is not limited to the scope of the embodiments described above, but may cover the scope of the invention specified in the appended claims.

### EXPLANATION OF THE REFERENCE NUMERALS

- 1: transaction information processing part
- 2: transaction information DB
- 3: transaction data generation part
- 4: generation rule storage part
- 5: commodity list
- 6: traceability information
- 11: trader search engine
- 12: trader DB
- 13: link processing part
- 14: link DB
- 21: data conversion part
- 22: conversion rule storage part
- 41: data fetch part
- 42: site-based metadata setting
- 43: user interactive part

## Claims

1. A transaction support system comprising:
a transaction information processing part configured to communicate with terminals of traders via the Internet;
a generation rule storage part configured to store a correspondence between a data item of order data and a data item of delivery data in a transaction; and
a transaction information storage part configured to store the order data and the delivery data, wherein
the transaction information processing part automatically generates delivery data based on the correspondence stored in the generation rule storage part from order data generated from a transaction between the traders, and stores the delivery data into the transaction information storage part.

2. The transaction support system according to claim 1, wherein
the generation rule storage part stores a correspondence between a data item of purchase data and a data item of sales data in a transaction, and
the transaction information processing part automatically generates sales data based on the correspondence stored in the generation rule storage part from purchase data generated in a transaction between the traders, and stores the sales data into the transaction information storage part.

3. The transaction support system according to claim 1, wherein
the transaction information storage part stores a commodity list for each of traders, the commodity list containing a commodity sold by the trader, and
the transaction support system further comprises a link processing part configured to, if a transaction between a trader and another trader is approved, add the commodity contained in the commodity list of one of the traders who acts as a supplier, to the commodity list of the other trader.

4. The transaction support system according to claim 3, wherein the link processing part performs addition of the commodity, provided that an authentication key preset to the one trader and an authentication key inputted by the other trader match each other.

5. The transaction support system according to claim 1, further comprising:
a conversion rule storage part configured to store a conversion rule for converting a data specification of transaction information managed by an existing system of a trader to a data specification of transaction information stored in the transaction information storage part; and
a data conversion part configured to covert the data specification of the transaction information acquired from the existing system to the data specification of the transaction information stored in the transaction information storage part based on the conversion rule stored in the conversion rule storage part,
wherein the transaction information processing part stores transaction information obtained through conversion by the data conversion part into the transaction information storage part.

6. The transaction support system according to claim 1, further comprising:
a conversion rule storage part configured to store a conversion rule for converting a data specification of transaction information stored in the transaction information storage part to a data specification of transaction information managed by an existing system of a trader; and
a data conversion part configured to covert the data specification of the transaction information acquired from the transaction information storage part to the data specification of the transaction information managed by the existing system of the trader based on the conversion rule stored in the conversion rule storage part, wherein
the transaction information processing part transmits transaction information obtained through conversion by the data conversion part to the existing system of the trader.

7. The transaction support system according to claim 1, further comprising a data fetch part configured to add metadata to transaction information independently managed by a trader, the metadata indicating a meaning of the transaction information, and to store the resultant transaction information into the transaction information storage part.
